# EUROPEAN PATENT APPLICATION

(11) **EP 4 220 757 A1**
(43) Date of publication of application: **02.08.2023**
(21) Application number: 21870708.1
(22) Date of filing: 02.03.2021
(51) Int. Cl.: H01M 4/134

(54) **SILICON-BASED NEGATIVE ELECTRODE MATERIAL CONTAINING SILICATE SKELETON, NEGATIVE ELECTRODE PLATE, AND LITHIUM BATTERY**

(30) Priority: 27.09.2020 CN 202011031904
(71) Applicant: Tianmulake Excellent Anode Materials Co., Ltd., Liyang, Jiangsu 213330 (CN)
(72) Inventor: YIN, Yingying, Liyang, Jiangsu 213330 (CN); LIU, Bonan, Liyang, Jiangsu 213330 (CN); LUO, Fei, Liyang, Jiangsu 213330 (CN); LI, Hong, Liyang, Jiangsu 213330 (CN)
(74) Representative: Glück Kritzenberger Patentanwälte PartGmbB
(86) International application number: PCT/CN2021/078603
(87) International publication number: WO 2022/062319

(57) **Abstract**

A silicon-based negative electrode material containing a silicate skeleton, a negative electrode plate and a hthiumbattery. The silicon-based negative electrode material comprises a modified silicon monoxide material having a dispersedly distributed silicate material inside same. The general formula of the modified silicon monoxide material having a dispersedly distributed silicate material inside same is MxSiOy, with 1<x<6, 3<y<6, element M comprising one or more of Mg, Ni, Cu, Zn, Al, Na, Ca, K, Li, Fe and Co, and the grain size being 0.5-100 nm. In the modified silicon monoxide material, the content of the silicate material is 5-60% of the total mass of the modified silicon monoxide material. The dispersedly distributed silicate material forms a skeleton structure of the silicon-based negative electrode material, does not undergo a physicochemical reaction along with the lithium removal and lithium intercalation of the silicon-based negative electrode material in the cycle process, and maintains the original structure thereof after multiple cycles.

## Description

### CROSS REFERENCE TO RELATED APPLICATIONS

This application claims priority for Chinese patent application No. 202011031904.2, entitled "Silicon-Based Negative Electrode Material Containing Silicate Skeleton, Negative Electrode plate and Lithium Battery", filed with China National Intellectual Property Administration on September 27, 2020.

### BACKGROUND OF THE INVENTION

### 1. Technical Field

The present invention relates to the technical field of secondary battery materials, in particular to a Silicon-based negative electrode material containing a silicate skeleton, a negative electrode plate and a lithium battery.

### 2. Description of Related Art

For new energy vehicles, the pursuit of long mileage requires higher energy density of batteries. In order to optimize the performance-to-price ratio of electric vehicles, the energy density of a battery cell needs to reach 350 Wh/Kg (750 Wh/L). In order to improve the energy density of batteries, domestic and foreign battery material factories are committed to developing positive and negative electrode active materials with higher capacity density.

A Silicon-based negative electrode is a main commercially developed high-energy density negative electrode material at present. The theoretical capacity of metallic silicon is as high as 4200 mAh/g, but the process of lithium intercalation for forming Li₂₂Si₅ alloy is accompanied by about 300% volume expansion, which will lead to the collapse of the structure of an electrode material and the continuous destruction and regeneration of a solid electrolyte interface (SEI), resulting in extremely poor cycling performance of metallic silicon.

Compared with silicon, SiOx has a smaller capacity, but has obvious advantages in relieving volume expansion and prolonging the cycle life of batteries. The ideal SiOx has a structure where silicon nanoclusters are uniformly dispersed in a SiO2 matrix. When lithium is intercalated in the first cycle, lithium reacts with SiO2 to generate a variety of irreversible lithium oxides. These irreversible products will serve as buffer zones for the volume expansion of silicon, and inhibit the volume expansion of silicon. However, the function of the buffer zones is limited, which cannot make the cycling performance of SiOx reach a practical standard.

In order to reduce the expansion of the Silicon-based negative electrode, researchers at home and abroad have made research and exploration through active material nanocrystallization, porous structure design and doping. Patent No.CN 103682287 A designed a structure in which nano-silicon particles are embedded in an inner layer of hollow graphite. Through nanocrystallization and the design of a hollow structure, the cycling performance of the silicon negative electrode is improved. A SiOx-TiO₂@C composite nanomaterial with a core-shell structure was reported in literature (Zhaolin, Li, Hailei, Et al. Watermelon-Like Structured SiOx-TiO2@C Nanocomposite as a High-Performance Lithium-Ion Battery Anode[J]. Advanced Functional Materials, 2016.). The volume change of TiO₂ is small during lithium intercalation and deintercalation. Therefore, by distributing TiO₂ in a SiOx matrix, a pinning effect is realized, thus improving the structural stability of SiOx particles and effectively improving the cycling characteristics of SiOx materials under high current density charging and discharging.

However, at present, the performance improvement of a Si-based negative electrode system is still faced with problems related to large-scale preparation and dispersion of nanoparticles, stability design of a porous structure, doping stability and so on. The problems of severe volume expansion and poor cycling performance of Si-based negative electrodes have not been solved effectively.

### BRIEF SUMMARY OF THE INVENTION

The embodiments of the present invention provide a Silicon-based negative electrode material containing a silicate skeleton, a negative electrode plate and a lithium battery. By introducing a silicate material into a traditional SiOx material in a dispersing manner, the SiOx material is modified to serve as a Silicon-based negative electrode material, and the dispersed silicate material forms a skeleton structure of the Si-based negative electrode material. The silicate skeleton can generate a pinning effect on the volume expansion of the Si-based negative electrode, so as to alleviate deformation stress, and improve the cycling performance of the material.

In a first aspect, an embodiment of the present invention provides a Silicon--based negative electrode material containing a silicate skeleton, wherein the Si-based negative electrode material comprises a modified SiOx material with a silicate material dispersed inside;
the general formula of the modified SiOx material with a silicate material dispersed inside is MₓSiO_{y}, 1 ≤ x < 6, 3 ≤ y < 6, the element M is one or more of Mg, Ni, Cu, Zn, Al, Na, Ca, K, Li, Fe and Co, the grain size of the modified SiOx material is 0.5-100 nm, and in the modified SiOx material, the silicate material accounts for 5%-60% of the total mass of the modified SiOx material; and
the dispersed silicate material constitutes a skeleton structure of the Si-based negative electrode material, does not have physical and chemical reactions with lithium intercalation and deintercalation of the Si-based negative electrode material during the cycling process, and keeps an original structure even after multiple cycles.

Preferably, the Si-based negative electrode material further comprises a carbon coating layer, and
the modified SiOx material is coated with the carbon coating layer with a thickness of 1-100 nm.

Preferably, the grain size of the modified SiOx material is 2-30 nm, and in the modified SiOx material, the silicate material accounts for 10-30% of the total mass of the modified SiOx material.

Preferably, an average particle diameter (D₅₀) of the Si-based negative electrode material is 0.1-40 µm, and a specific surface area is 0.5-40 m²/g.

Further, preferably, the average particle diameter (D₅₀) of the Si-based negative electrode material is 2-15 µm, and the specific surface area is 1-10 m²/g.

Preferably, when the element M is Mg, the corresponding silicate is MgSiOs and/or Mg₂SiO₄, maximum X-ray diffraction (XRD) peaks of MgSiO₃ are located at one or more of 28.1 degrees, 31.1 degrees, 34.8 degrees, 34.9 degrees and 36.9 degrees, and a maximum XRD peak of Mg₂SiO₄ is located at 36.5 degrees;
when the element M is Ni, the corresponding silicate is NiSiO₄, and a maximum XRD peak of NiSiO₄ is located at 37.0 degrees;
when the element M is Cu, the corresponding silicate is CuSiO₃ and a maximum XRD peak of CuSiO₃ is located at 12.2 degrees;
when the element M is Zn, the corresponding silicate is ZnSiO₃ and/or Zn₂SiO₄, maximum XRD peaks of ZnSiO₃ are located at 31.0 degrees and/or 34.0 degrees, and maximum XRD peaks of Zn₂SiO₄ are located at one of more of (31.0 degrees and 34.0 degrees), 31.5 degrees, 31.7 degrees, 33.1 degrees, 36.5 degrees and 37.0 degrees;
when the element M is Al, the corresponding silicate is Al₂SiO₅, and a maximum XRD peak of Al₂SiO₅ is located at 26.1 degrees and/or 28.0 degrees;
when the element M is Na, the corresponding silicate is Na₂SiO₃ and/or Na₄SiO₄, a maximum XRD peak of Na₂SiO₃ is located at 29.4 degrees, and maximum XRD peaks of Na₄SiO₄ are located at 13.0 degrees and 23.2 degrees;
when the element M is Ca, the corresponding silicate is CaSiO₃ and/or Ca₂SiO₄, maximum XRD peaks of CaSiO₃ are located at 25.3 degrees and/or 30.0 degrees, and maximum XRD peaks of Ca₂SiO₄ are located at one of more of 32.0 degrees, 32.1 degrees, 32.5 degrees, 32.7 degrees, 32.8 degrees, 33.0 degrees and 33.2 degrees;
when the element M is K, the corresponding silicate is K₄SiO₄, and maximum XRD peaks of K₄SiO₄ are located at 30.4 degrees and 37.8 degrees;
when the element M is Li, the corresponding silicate is Li₂SiO₃ and/or Li₄SiO₄, maximum XRD peaks of Li₂SiO₃ are located at 18.9 degrees and/or 27.0 degrees, and maximum XRD peaks of Li₄SiO₄ are located at (22.2 degrees and 33.8 degrees) and/or 34.9 degrees;
when the element M is Fe, the corresponding silicate is FeSiO₃ and/or Fe₂SiO₄, a maximum XRD peak of FeSiO₃ is located at 32.7 degrees, and a maximum XRD peak of Fe₂SiO₄ is located at 63.8 degrees; and
when the element M is Co, the corresponding silicate is Co₂SiO₄, and maximum XRD peaks of Co₂SiO₄ are located at 36.4 degrees, 36.5 degrees and 36.6 degrees.

In a second aspect, an embodiment of the present invention provides a negative electrode plate, which comprises the Si-based negative electrode material containing the silicate skeleton described in the first aspect.

In a third aspect, an embodiment of the present invention provides a lithium battery, and the lithium battery comprises the Si-based negative electrode material containing the silicate skeleton described in the first aspect.

Preferably, the negative electrode plate comprises the Si-based negative electrode material containing the silicate skeleton described in the first aspect above.

According to the Si-based negative electrode material containing the silicate skeleton provided by the present invention, the SiOx material is modified by introducing the silicate material into the traditional SiOx material in a dispersing manner, so that the modified material can be used as a Si-based negative electrode material. The dispersed silicate material is stable in structure and property, and does not have physical and chemical reactions with lithium intercalation and deintercalation of the material. The silicate material constitutes the skeleton structure of the Si-based negative electrode material, and the silicate skeleton can generate a pinning effect on the volume expansion of the Si-based negative electrode, so as to alleviate deformation stress, and improve the cycling performance of the material.

### BRIEF DESCRIPTION OF THE SEVERAL VIEWS OF THE DRAWINGS

The technical solution of the embodiments of the present invention will be described in further detail with reference to the drawings and embodiments.
Fig. 1 is an X-ray diffraction (XRD) diagram of a Silicon-based negative electrode containing a silicate skeleton provided in Embodiment 1 of the present invention after one cycle;
Fig. 2 is an XRD diagram of the Silicon-based negative electrode containing the silicate skeleton provided in Embodiment 1 of the present invention after 50 cycles;
Fig. 3 is a scanning electron microscope (SEM) diagram of Silicon-based negative electrode particles containing the silicate skeleton provided in Embodiment 1 of the present invention;
Fig. 4 is an XRD diagram of a Silicon-based negative electrode containing a silicate skeleton provided in Embodiment 2 of the present invention after one cycle; and
Fig. 5 is an XRD diagram of the Silicon-based negative electrode containing the silicate skeleton provided in Embodiment 2 of the present invention after 50 cycles.

### DETAILED DESCRIPTION OF THE PRESENT INVENTION

The present invention will be further explained below with reference to drawings and specific embodiments, but it should be understood that these embodiments are only for more detailed explanation, and should not be construed as limiting the present invention in any way, that is, not intended to limit the scope of protection of the present invention.

A Silicon-based negative electrode material containing a silicate skeleton provided by the present invention comprises a modified SiOx material with a silicate material dispersed inside;

the general formula of the modified SiOx material with a silicate material dispersed inside is MₓSiO_{y}, 1 ≤ x < 6, 3 ≤ y < 6, the element M is one or more of Mg, Ni, Cu, Zn, Al, Na, Ca, K, Li, Fe and Co, the grain size of the modified SiOx material is 0.5-100 nm, preferably 2-30 nm, and in the modified SiOx material, the silicate material accounts for 5-60% of the total mass of the modified SiOx material, preferably 10-30%; and

the dispersed silicate material constitutes a skeleton structure of the Silicon-based negative electrode material, does not have physical and chemical reactions with lithium intercalation and deintercalation of the Silicon-based negative electrode material during the cycling process, and keeps the original structure even after multiple cycles.

Further, the Silicon-based negative electrode material may also comprise a carbon coating layer, and the modified SiOx material is coated with the carbon coating layer with a thickness of 1-100 nm.

The average particle diameter (D₅₀) of the Silicon-based negative electrode material of the present invention is 0.1-40 µm, and the specific surface area is 0.5-40 m²/g. In a preferred embodiment, the average particle diameter (D₅₀) is 2-15 µm, and the specific surface area is 1-10 m²/g.

The dispersion of different silicates corresponds to different structures and morphologies of internal molecules of the obtained Silicon-based negative electrode material.

When the element M is Mg, the corresponding silicate is MgSiO₃ and/or Mg₂SiO₄, maximum X-ray diffraction (XRD) peaks of MgSiO₃ are located at one or more of 28.1 degrees, 31.1 degrees, 34.8 degrees, 34.9 degrees and 36.9 degrees, and a maximum XRD peak of Mg₂SiO₄ is located at 36.5 degrees;
when the element M is Ni, the corresponding silicate is NiSiO₄, and a maximum XRD peak of NiSiO₄ is located at 37.0 degrees;
when the element M is Cu, the corresponding silicate is CuSiO₃, and a maximum XRD peak of CuSiO₃ is located at 12.2 degrees;
when the element M is Zn, the corresponding silicate is ZnSiO₃ and/or Zn₂SiO₄, maximum XRD peaks of ZnSiO₃ are located at 31.0 degrees and/or 34.0 degrees, and maximum XRD peaks of Zn₂SiO₄ are located at one of more of (31.0 degrees and 34.0 degrees), 31.5 degrees, 31.7 degrees, 33.1 degrees, 36.5 degrees and 37.0 degrees;
when the element M is Al, the corresponding silicate is Al₂SiO₅, and a maximum XRD peak of Al₂SiO₅ is located at 26.1 degrees and/or 28.0 degrees;
when the element M is Na, the corresponding silicate is Na₂SiO₃ and/or Na₄SiO₄, a maximum XRD peak of Na₂SiO₃ is located at 29.4 degrees, and maximum XRD peaks of Na₄SiO₄ are located at 13.0 degrees and 23.2 degrees;
when the element M is Ca, the corresponding silicate is CaSiO₃ and/or Ca₂SiO₄, maximum XRD peaks of CaSiO₃ are located at 25.3 degrees and/or 30.0 degrees, and maximum XRD peaks of Ca₂SiO₄ are located at one of more of 32.0 degrees, 32.1 degrees, 32.5 degrees, 32.7 degrees, 32.8 degrees, 33.0 degrees and 33.2 degrees;
when the element M is K, the corresponding silicate is K₄SiO₄, and maximum XRD peaks of K₄SiO₄ are located at 30.4 degrees and 37.8 degrees;
when the element M is Li, the corresponding silicate is Li₂SiO₃ and/or Li₄SiO₄, maximum XRD peaks of Li₂SiO₃ are located at 18.9 degrees and/or 27.0 degrees, and maximum XRD peaks of Li₄SiO₄ are located at (22.2 degrees and 33.8 degrees) and/or 34.9 degrees;
when the element M is Fe, the corresponding silicate is FeSiO₃ and/or Fe₂SiO₄, a maximum XRD peak of FeSiO₃ is located at 32.7 degrees, and a maximum XRD peak of Fe₂SiO₄ is located at 63.8 degrees; and
when the element M is Co, the corresponding silicate is Co₂SiO₄, and maximum XRD peaks of Co₂SiO₄ are located at 36.4 degrees, 36.5 degrees and 36.6 degrees.

The Silicon-based negative electrode material mentioned above can be used in negative electrode plates and lithium ion batteries, such as liquid lithium ion batteries, semi-solid lithium ion batteries, all-solid ion batteries or lithium-sulfur batteries, and can also be combined with other materials to serve as a negative electrode material in practice.

According to the Silicon-based negative electrode material containing the silicate skeleton provided by the present invention, the SiOx material is modified by introducing the silicate material into the traditional SiOx material in a dispersing manner, so that the modified material can be used as a Silicon-based negative electrode material. The dispersed silicate material has is stable in structure and property, and does not have physical and chemical reactions with lithium intercalation and deintercalation of the material. The silicate material constitutes the skeleton structure of the Silicon-based negative electrode material, and the silicate skeleton can generate a pinning effect on the volume expansion of the Silicon-based negative electrode, so as to alleviate deformation stress, and improve the cycling performance of the material.

In order to better understand the technical scheme provided by the present invention, several specific examples are given below to illustrate Silicon-based negative electrode materials containing different silicate skeletons, application methods thereof in lithium ion batteries and battery characteristics.

### Embodiment 1

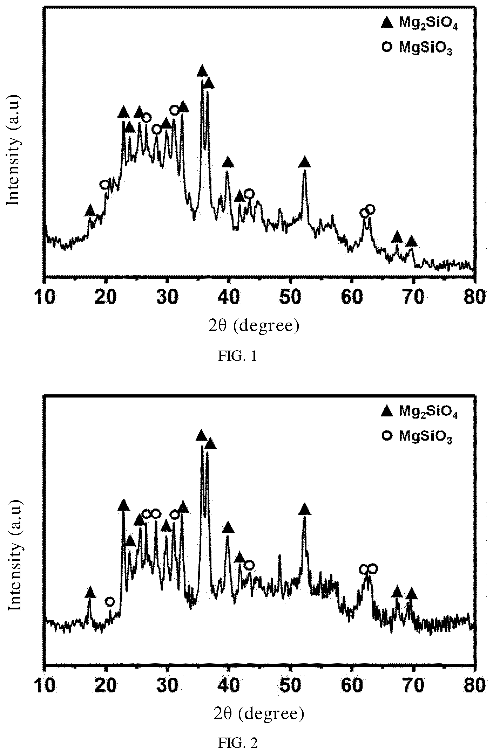

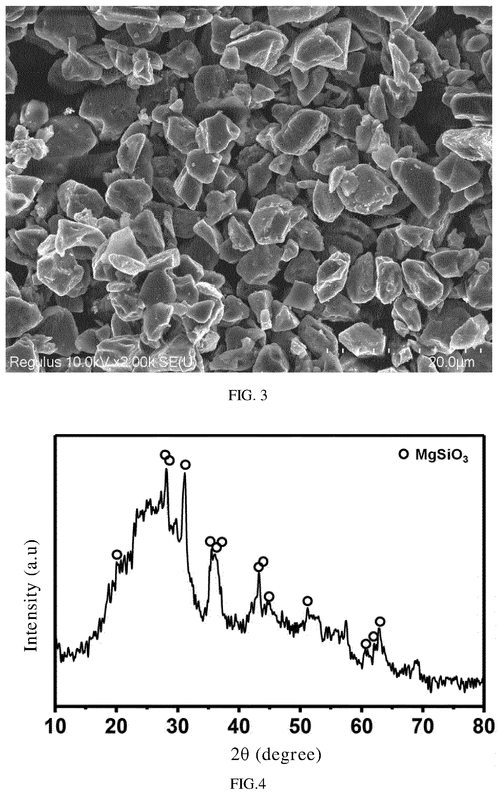

(1) SiOx powder, magnesium metasilicate powder and magnesium silicate powder were uniformly mixed according to the mass ratio of 3:0.3:0.7, and placed in a vacuum furnace;
(2) the mixture was subjected to heat treatment at 1400°C for 2 hours in vacuum, and then cooled, crushed and screened;
(3) the screened sample was mixed with petroleum asphalt according to the mass ratio of 20:1, and the mixture was placed in a high-temperature furnace to be subjected to heat treatment at 900°C in a nitrogen atmosphere for 2 hours to obtain a Silicon-based negative electrode containing a magnesium metasilicate and magnesium silicate skeleton;
   According to the solid-solid mixing method, silicate firstly adhered to surfaces of SiOx particles, and then high-temperature treatment was conducted, so that the silicate can quickly diffuse into the SiOx particles to form a skeleton structure under the driving of its own concentration difference;
(4) the Silicon-based negative electrode containing the magnesium metasilicate and magnesium silicate skeleton, carbon black (SP) and sodium carboxymethyl cellulose (CMC) were mixed according to the ratio of 7: 2: 1 to prepare negative electrode slurry, a negative electrode plate was prepared after coating and drying, the ternary positive electrode material, Lithium nickel cobalt manganate NCM 333, was used as a counter electrode, a button cell was assembled in a glove box, a charging and discharging test was conducted, and then cycling performance was evaluated; results are shown in Table 1;
(5) discharged batteries were disassembled after one cycle and 50 cycles, a negative electrode plate was soaked and washed with a dimethyl carbonate (DMC) solvent, an electrode sheet material was scraped off after air-drying for an XRD test, and the XRD diagrams obtained are shown in Figs. 1 and 2; and it can be clearly seen in the figures that the material contains MgSiO₃ and Mg₂SiO₄, with the main peaks at 31.1 degrees and 36.5 degrees respectively, and after 50 cycles, XRD peaks of the MgSiO₃ and Mg₂SiO₄ skeleton did not change; and
(6) the SEM diagram of the carbon-coated Silicon-based negative electrode particles containing the magnesium metasilicate and magnesium silicate skeleton obtained in this embodiment is shown in Fig. 3.

### Embodiment 2

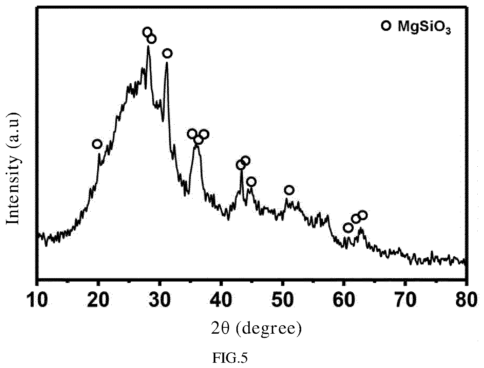

(1) SiOx powder and magnesium metasilicate powder were uniformly mixed according to the mass ratio of 3:1, and placed in a vacuum furnace;
(2) the mixture was subjected to heat treatment at 1400°C for 2 hours in vacuum, and then cooled, crushed and screened;
(3) a screened sample was placed in a rotary furnace, a mixed gas of argon and methane with a volume ratio of 3:1 was introduced at 1000°C, and the temperature was kept for 2 hours to obtain a Silicon-based negative electrode containing a magnesium metasilicate skeleton;
(4) the Silicon-based negative electrode containing the magnesium metasilicate skeleton, carbon black (SP) and sodium carboxymethyl cellulose (CMC) were mixed according to the ratio of 7: 2: 1 to prepare negative electrode slurry, a negative electrode plate was prepared after coating and drying, a positive electrode material, lithium cobaltate (LCO), was used as a counter electrode, a button cell was assembled in a glove box, a charging and discharging test was conducted, and then cycling performance was evaluated; results are shown in Table 1;
(5) discharged batteries were disassembled after one cycle and 50 cycles, a negative electrode plate was soaked and washed with a DMC solvent, an electrode sheet material was scraped off after air-drying for an XRD test, and the XRD diagrams obtained are shown in Figs. 4 and 5; and it can be clearly seen in the figures that the material contains MgSiO₃, with the main peak at 31.1 degrees, and after 50 cycles, XRD peaks of the MgSiO₃ skeleton did not change.

### Embodiment 3

(1) SiOx powder and nickel silicate were uniformly mixed according to the mass ratio of 3:1, and placed in a vacuum furnace;
(2) the mixture was subjected to heat treatment at 1400°C for 2 hours in vacuum, and then cooled, crushed and screened;
(3) a screened sample was placed in a rotary furnace, a mixed gas of argon and acetylene with a volume ratio of 2:1 was introduced at 950°C, and the temperature was kept for 2 hours to obtain a Silicon-based negative electrode containing a nickel silicate skeleton;
(4) the Silicon-based negative electrode containing the nickel silicate skeleton, carbon black (SP) and sodium carboxymethyl cellulose (CMC) were mixed according to the ratio of 7: 2: 1 to prepare negative electrode slurry, a negative electrode plate was prepared after coating and drying, the ternary positive electrode material, Lithium nickel cobalt manganate NCM 523, was used as a counter electrode, a button cell was assembled in a glove box, a charging and discharging test was conducted, and then cycling performance was evaluated; results are shown in Table 1.

### Embodiment 4

(1) SiOx powder and copper metasilicate powder were uniformly mixed according to the mass ratio of 3:1, and placed in a vacuum furnace;
(2) the mixture was subjected to heat treatment at 1400°C for 2 hours in vacuum, and then cooled, crushed and screened;
(3) a screened sample and phenolic resin were dissolved in an alcohol solvent according to the ratio of 20:1, and stirred for 6 hours to form uniform slurry;
(4) the above slurry was directly dried;
(5) the dried slurry was placed in a high-temperature furnace, and the mixture was sintered at 900°C for 2 hours in a nitrogen protection atmosphere, and then cooled, crushed and screened to obtain a Silicon-based negative electrode containing a copper metasilicate skeleton;
(6) the Silicon-based negative electrode containing the copper metasilicate skeleton, carbon black (SP) and sodium carboxymethyl cellulose (CMC) were mixed according to the ratio of 7: 2: 1 to prepare negative electrode slurry, a negative electrode plate was prepared after coating and drying, a ternary positive electrode material, Lithium nickel cobalt aluminate NCA, was used as a counter electrode, a button cell was assembled in a glove box, a charging and discharging test was conducted, and then cycling performance was evaluated; results are shown in Table 1.

### Embodiment 5

(1) SiOx powder, zinc metasilicate powder and zinc silicate powder were uniformly mixed according to the mass ratio of 3:0.3:0.7, and placed in a vacuum furnace;
(2) the mixture was subjected to heat treatment at 1400°C for 2 hours in vacuum, and then cooled, crushed and screened;
(3) a screened sample was mixed with glucose powder according to the ratio of 20:1, and the mixture was placed in a high-temperature furnace to be sintered at 900°C in an argon protection atmosphere for 2 hours to obtain a Silicon-based negative electrode containing a zinc metasilicate and zinc silicate skeleton;
(4) the Silicon-based negative electrode containing the zinc metasilicate and zinc silicate skeleton, carbon black (SP) and sodium carboxymethyl cellulose (CMC) were mixed according to the ratio of 7: 2: 1 to prepare negative electrode slurry, a negative electrode plate was prepared after coating and drying, a positive electrode material, lithium manganese oxide (LMO), was used as a counter electrode, a button cell was assembled in a glove box, a charging and discharging test was conducted, and then cycling performance was evaluated; results are shown in Table 1.

### Embodiment 6

(1) SiOx powder and aluminum silicate were uniformly mixed according to the mass ratio of 3:1, and placed in a vacuum furnace;
(2) the mixture was subjected to heat treatment at 1400°C for 2 hours in vacuum, and then cooled, crushed and screened;
(3) the screened sample and polyvinylidene fluoride (PVDF) were dissolved in an N,N-dimethylformamide (DMF) solvent according to the ratio of 20:1, and stirred for 6 hours to form uniform slurry;
(4) the above slurry was directly dried;
(5) the dried slurry was placed in a high-temperature furnace, and the mixture was sintered at 900°C for 2 hours in an argon protection atmosphere, and then cooled, crushed and screened to obtain a Silicon-based negative electrode containing an aluminum silicate skeleton;
(6) the Silicon-based negative electrode containing the aluminum silicate skeleton, carbon black (SP) and sodium carboxymethyl cellulose (CMC) were mixed according to the ratio of 7:2:1 to prepare negative electrode slurry, a negative electrode plate was prepared after coating and drying, a ternary positive electrode material, NCM 811, was used as a counter electrode, a button cell was assembled in a glove box, a charging and discharging test was conducted, and then cycling performance was evaluated; results are shown in Table 1.

### Embodiment 7

(1) SiOx powder, sodium metasilicate powder and sodium silicate powder were uniformly mixed according to the mass ratio of 3:0.3:0.7, and placed in a vacuum furnace;
(2) the mixture was subjected to heat treatment at 1400°C for 2 hours in vacuum, and then cooled, crushed and screened;
(3) a screened sample was placed in a rotary furnace, a mixed gas of argon and acetylene with a volume ratio of 2:1 was introduced at 950°C, and the temperature was kept for 2 hours to obtain a Silicon-based negative electrode containing a sodium metasilicate and sodium silicate skeleton;
(4) the Silicon-based negative electrode containing the sodium metasilicate and sodium silicate skeleton, carbon black (SP) and sodium carboxymethyl cellulose (CMC) were mixed according to the ratio of 7: 2: 1 to prepare negative electrode slurry, a negative electrode plate was prepared after coating and drying, a positive electrode material, lithium cobaltate (LCO), was used as a counter electrode, a button cell was assembled in a glove box, a charging and discharging test was conducted, and then cycling performance was evaluated; results are shown in Table 1.

### Embodiment 8

(1) SiOx powder, calcium metasilicate powder and calcium silicate powder were uniformly mixed according to the mass ratio of 3:0.3:0.7, and placed in a vacuum furnace;
(2) the mixture was subjected to heat treatment at 1400°C for 2 hours in vacuum, and then cooled, crushed and screened;
(3) a screened sample was placed in a rotary furnace, a mixed gas of argon and methane with a volume ratio of 3:1 was introduced at 1000°C, and the temperature was kept for 2 hours to obtain a Silicon-based negative electrode containing a calcium metasilicate and calcium silicate skeleton;
(4) the Silicon-based negative electrode containing the calcium metasilicate and calcium silicate skeleton, carbon black (SP) and sodium carboxymethyl cellulose (CMC) were mixed according to the ratio of 7: 2: 1 to prepare negative electrode slurry, a negative electrode plate was prepared after coating and drying, a positive electrode material, lithium cobaltate (LCO), was used as a counter electrode, a button cell was assembled in a glove box, a charging and discharging test was conducted, and then cycling performance was evaluated; results are shown in Table 1.

### Embodiment 9

(1) SiOx powder and potassium silicate were uniformly mixed according to the mass ratio of 3:1, and placed in a vacuum furnace;
(2) the mixture was subjected to heat treatment at 1400°C for 2 hours in vacuum, and then cooled, crushed and screened;
(3) the screened sample was mixed with petroleum asphalt according to the mass ratio of 20:1, and the mixture was placed in a high-temperature furnace to be subjected to heat treatment at 900°C in a nitrogen atmosphere for 2 hours to obtain a Silicon-based negative electrode containing a potassium silicate skeleton;
(4) the Silicon-based negative electrode containing the potassium silicate skeleton, carbon black (SP) and sodium carboxymethyl cellulose (CMC) were mixed according to the ratio of 7:2:1 to prepare negative electrode slurry, a negative electrode plate was prepared after coating and drying, the ternary positive electrode material, NCM 333, was used as a counter electrode, a button cell was assembled in a glove box, a charging and discharging test was conducted, and then cycling performance was evaluated; results are shown in Table 1.

### Embodiment 10

(1) SiOx powder, lithium metasilicate powder and lithium silicate powder were uniformly mixed according to the mass ratio of 3:0.3:0.7, and placed in a vacuum furnace;
(2) the mixture was subjected to heat treatment at 1400°C for 2 hours in vacuum, and then cooled, crushed and screened;
(3) the screened sample was mixed with petroleum asphalt according to the mass ratio of 20:1, and the mixture was placed in a high-temperature furnace to be subjected to heat treatment at 900°C in a nitrogen atmosphere for 2 hours to obtain a Silicon-based negative electrode containing a lithium metasilicate and lithium silicate skeleton;
(4) the Silicon-based negative electrode containing the lithium metasilicate and lithium silicate skeleton, carbon black (SP) and sodium carboxymethyl cellulose (CMC) were mixed according to the ratio of 7:2:1 to prepare negative electrode slurry, a negative electrode plate was prepared after coating and drying, the ternary positive electrode material, NCM 333, was used as a counter electrode, a button cell was assembled in a glove box, a charging and discharging test was conducted, and then cycling performance was evaluated; results are shown in Table 1.

### Embodiment 11

(1) SiOx powder, ferric metasilicate powder and ferric silicate powder were uniformly mixed according to the mass ratio of 3:0.3:0.7, and placed in a vacuum furnace;
(2) the mixture was subjected to heat treatment at 1400°C for 2 hours in vacuum, and then cooled, crushed and screened;
(3) a screened sample was placed in a rotary furnace, a mixed gas of argon and methane with a volume ratio of 3:1 was introduced at 1000°C, and the temperature was kept for 2 hours to obtain a Silicon-based negative electrode containing a ferric metasilicate and ferric silicate skeleton;
(4) the Silicon-based negative electrode containing the ferric metasilicate and ferric silicate skeleton, carbon black (SP) and sodium carboxymethyl cellulose (CMC) were mixed according to the ratio of 7: 2: 1 to prepare negative electrode slurry, a negative electrode plate was prepared after coating and drying, a positive electrode material, lithium cobaltate (LCO), was used as a counter electrode, garnet type Li₇La₃Zr₂O₁₂(LLZO) was used as a solid electrolyte, a solid button cell was assembled in a glove box, a charging and discharging test was conducted, and then cycling performance was evaluated; results are shown in Table 1.

### Embodiment 12

(1) SiOx powder, Cobalt metasilicate powder, and cobaltous silicate were uniformly mixed according to the mass ratio of 3:0.3:0.7, and placed in a vacuum furnace;
(2) the mixture was subjected to heat treatment at 1400°C for 2 hours in vacuum, and then cooled, crushed and screened;
(3) a screened sample was placed in a rotary furnace, a mixed gas of argon and methane with a volume ratio of 3:1 was introduced at 1000°C, and the temperature was kept for 2 hours to obtain a Silicon-based negative electrode containing a cobaltous silicate skeleton;
(4) the Silicon-based negative electrode containing the cobaltous silicate skeleton, carbon black (SP) and sodium carboxymethyl cellulose (CMC) were mixed according to the ratio of 7: 2: 1 to prepare negative electrode slurry, a negative electrode plate was prepared after coating and drying, a positive electrode material, lithium cobaltate (LCO), was used as a counter electrode, a polyolefin-based gel polymer electrolyte membrane was used as a semi-solid electrolysis, a semi-solid button cell was assembled in a glove box, a charging and discharging test was conducted, and then cycling performance was evaluated; results are shown in Table 1.

For convenience of explanation, the present invention also provides a comparative example.

### Comparative example 1

(1) SiOx powder was placed in a vacuum furnace;
(2) the SiOx powder was subjected to heat treatment at 1400°C for 2 hours in vacuum, and then cooled, crushed and screened;
(3) a screened sample was mixed with petroleum asphalt according to the mass ratio of 20:1 the mixture was placed in a high-temperature furnace to be subjected to heat treatment at 900°C in a nitrogen atmosphere for 2 hours; and
(4) an obtained Silicon-based negative electrode, carbon black (SP) and sodium carboxymethyl cellulose (CMC) were mixed according to the ratio of 7: 2: 1 to prepare negative electrode slurry, a negative electrode plate was prepared after coating and drying, the ternary positive electrode material, NCM 333, was used as a counter electrode, a button cell was assembled in a glove box, a charging and discharging test was conducted, and then cycling performance was evaluated; results are shown in Table 1.

**Table 1**

| Embodiment | First-cycle efficiency % | 50-cycle capacity retention rate % |
|---|---|---|
| 1 | 83.91 | 52.8 |
| 2 | 83.53 | 50.3 |
| 3 | 82.88 | 52.2 |
| 4 | 83.67 | 52.2 |
| 5 | 82.50 | 52.0 |
| 6 | 82.43 | 51.3 |
| 7 | 83.66 | 53.6 |
| 8 | 82.73 | 44.9 |
| 9 | 83.62 | 46.2 |
| 10 | 83.82 | 51.8 |
| 11 | 83.73 | 40.3 |
| 12 | 83.88 | 42.9 |
| Comparative example 1 | 79.50 | 21.2 |

Table 1 above shows the comparison of the electrochemical cycling performance of lithium secondary batteries prepared in Embodiments 1-12 and Comparative Example 1. By comparison, it can be seen that in the embodiments, phosphate was dispersed in a matrix of the Silicon-based negative electrode, which plays a role of supporting the skeleton, and no physical and chemical reaction occurred during electrochemical lithium intercalation and deintercalation. This stable structure provides skeleton support for the Silicon-based negative electrode, and alleviates stress and strain caused by volume expansion, so that the 50-cycle capacity retention rate of each embodiment is greatly improved compared with the comparative example, that is, the cycling performance of the silicon-based negative electrode is effectively improved.

The above-mentioned specific embodiments further explain the purpose, technical scheme and beneficial effects of the present invention in detail. It should be understood that the above are only specific embodiments of the present invention and are not used to limit the scope of protection of the present invention. Any modification, equivalent substitution, improvement, etc. made within the spirit and principles of the present invention should be included in the scope of protection of the present invention.

## Claims

1. A Silicon-based negative electrode material containing a silicate skeleton, wherein the Silicon-based negative electrode material comprises a modified SiOx material with a silicate material dispersed inside;
the general formula of the modified SiOx material with a silicate material dispersed inside is MₓSiO_{y}, 1 ≤ x < 6, 3 ≤ y < 6, the element M is one or more of Mg, Ni, Cu, Zn, Al, Na, Ca, K, Li, Fe and Co, the grain size of the modified SiOx material is 0.5-100 nm, and in the modified SiOx material, the silicate material accounts for 5-60% of the total mass of the modified SiOx material; and
the dispersed silicate material constitutes a skeleton structure of the Silicon-based negative electrode material, does not have physical and chemical reactions with lithium intercalation and deintercalation of the Silicon-based negative electrode material during a cycling process, and keeps an original structure even after multiple cycles.

2. The Silicon-based negative electrode material according to claim 1, wherein the Silicon-based negative electrode material further comprises a carbon coating layer, and
the modified SiOx material is coated with the carbon coating layer with a thickness of 1-100 nm.

3. The Silicon-based negative electrode material according to claim 1, wherein the grain size of the modified SiOx material is 2-30 nm, and in the modified SiOx material, the silicate material accounts for 10-30% of the total mass of the modified SiOx material.

4. The Silicon-based negative electrode material according to claim 1, wherein an average particle diameter (D₅₀) of the Silicon-based negative electrode material is 0.1-40 µm, and a specific surface area of the Silicon-based negative electrode material is 0.5-40 m²/g.

5. The Silicon-based negative electrode material according to claim 4, wherein the average particle diameter (D₅₀) of the Silicon-based negative electrode material is 2-15 µm, and the specific surface area is 1-10 m²/g.

6. The Silicon-based negative electrode material according to claim 1, wherein
when the element M is Mg, the corresponding silicate is MgSiO₃ and/or Mg₂SiO₄, maximum X-ray diffraction (XRD) peaks of MgSiO₃ are located at one or more of 28.1 degrees, 31.1 degrees, 34.8 degrees, 34.9 degrees and 36.9 degrees, and a maximum XRD peak of Mg₂SiO₄ is located at 36.5 degrees;
when the element M is Ni, the corresponding silicate is NiSiO₄, and a maximum XRD peak of NiSiO₄ is located at 37.0 degrees;
when the element M is Cu, the corresponding silicate is CuSiO₃ and a maximum XRD peak of CuSiO₃ is located at 12.2 degrees;
when the element M is Zn, the corresponding silicate is ZnSiO₃ and/or Zn₂SiO₄, maximum XRD peaks of ZnSiO₃ are located at 31.0 degrees and/or 34.0 degrees, and maximum XRD peaks of Zn₂SiO₄ are located at one of more of (31.0 degrees and 34.0 degrees), 31.5 degrees, 31.7 degrees, 33.1 degrees, 36.5 degrees and 37.0 degrees;
when the element M is Al, the corresponding silicate is Al₂SiO₅, and a maximum XRD peak of Al₂SiO₅ is located at 26.1 degrees and/or 28.0 degrees;
when the element M is Na, the corresponding silicate is Na₂SiO₃ and/or Na₄SiO₄, a maximum XRD peak of Na₂SiO₃ is located at 29.4 degrees, and maximum XRD peaks of Na₄SiO₄ are located at 13.0 degrees and 23.2 degrees;
when the element M is Ca, the corresponding silicate is CaSiO₃ and/or Ca₂SiO₄, maximum XRD peaks of CaSiO₃ are located at 25.3 degrees and/or 30.0 degrees, and maximum XRD peaks of Ca₂SiO₄ are located at one of more of 32.0 degrees, 32.1 degrees, 32.5 degrees, 32.7 degrees, 32.8 degrees, 33.0 degrees and 33.2 degrees;
when the element M is K, the corresponding silicate is K₄SiO₄, and maximum XRD peaks of K₄SiO₄ are located at 30.4 degrees and 37.8 degrees;
when the element M is Li, the corresponding silicate is Li₂SiO₃ and/or Li₄SiO₄, maximum XRD peaks of Li₂SiO₃ are located at 18.9 degrees and/or 27.0 degrees, and maximum XRD peaks of Li₄SiO₄ are located at (22.2 degrees and 33.8 degrees) and/or 34.9 degrees;
when the element M is Fe, the corresponding silicate is FeSiO₃ and/or Fe₂SiO₄, a maximum XRD peak of FeSiO₃ is located at 32.7 degrees, and a maximum XRD peak of Fe₂SiO₄ is located at 63.8 degrees; and
when the element M is Co, the corresponding silicate is Co₂SiO₄, and maximum XRD peaks of Co₂SiO₄ are located at 36.4 degrees, 36.5 degrees and 36.6 degrees.

7. A negative electrode plate, wherein the negative electrode plate comprises the Silicon-based negative electrode material containing the silicate skeleton according to any one of claims 1-6.

8. A lithium battery, wherein the lithium battery comprises the Silicon-based negative electrode material containing the silicate skeleton according to any one of claims 1-6.

9. The lithium battery according to claim 8, wherein the lithium battery is a liquid lithium ion battery, a semi-solid lithium ion battery, an all-solid ion battery or a lithium-sulfur battery.
